# EUROPEAN PATENT SPECIFICATION

(11) **EP 4 326 041 B1**
(45) Date of publication and mention of the grant of the patent: **24.09.2025**
(21) Application number: 22728316.5
(22) Date of filing: 22.04.2022
(51) Int. Cl.: A01C 5/06, A01C 7/20

(54) **OUTPUT UNIT AND METHOD OF OPERATING AN AGRICULTURAL IMPLEMENT**
AUSGABEEINHEIT UND VERFAHREN ZUM BETRIEB EINES LANDWIRTSCHAFTLICHEN ARBEITSGERÄTS
UNITÉ DE SORTIE ET PROCÉDÉ DE FONCTIONNEMENT D'UN ÉQUIPEMENT AGRICOLE

(30) Priority: 23.04.2021 SE 2150519
(43) Date of publication of application: 28.02.2024
(73) Proprietor: Väderstad Holding AB, 590 21 Väderstad (SE)
(72) Inventor: ROMMEDAHL, Rune, 585 72 Ljungsbro (SE); STARK, Crister, 590 21 Väderstad (SE); SANDBERG, Bengt, 583 92 Vikingstad (SE)
(74) Representative: AWA Sweden AB
(86) International application number: PCT/SE2022/050392
(87) International publication number: WO 2022/225443

(56) References cited:
- EP-A1- 2 301 315
- US-A- 1 747 525
- US-A- 5 595 130
- US-A1- 2013 319 700
- US-A1- 2018 249 621

## Description

### Technical Field

This document discloses an output unit, such as a furrow opener or a row unit, for an agricultural implement, an agricultural implement comprising a plurality of such output units and a method of operating an agricultural implement.

The concepts shown in this document are used in particular in connection with setting the work depth for output units of the agricultural implement.

### Background

Agricultural implements for sowing, which comprise a plurality of output units, such as row units or furrow openers, which each may comprise a seed furrow-opener, a depth regulator, a sowing tube and a seed furrow-sealer, are known. Such agricultural implements can also comprise any form of pressure means for pressing down seed placed in an opened seed furrow.

Such output units are common in so-called "precision seed drills" or "planters", i.e. seed drills which place each seed at a predetermined distance from the adjacent seed, but also in seed drills with volumetric output, i.e. seed drills being used for cereals.

It is desirable to provide output units that are compact, viewed in the transverse direction of the agricultural implement, especially in seed drills with volumetric output which are used for sowing crops that can be placed at a small distance between the seed rows.

It is also desirable to be able to control the drilling depth with good precision. It is known to control the drilling depth by setting the vertical position of a depth regulator in a certain relationship to the vertical position of a seed furrow-opener. In addition, it is known to set the drilling depth by controlling the force with which the seed furrow-opener is pressed to the ground.

**It** is further desirable to be able to quickly set the drilling depth even for a large machine with a large number of output units.

Furthermore, it is desirable to be able to set the drilling depth while the agricultural implement is operated, for example when sowing is in progress, in order to be able to manage variations in the bearing capacity of the earth across the area where sowing is taking place.

Moreover, it is desirable to be able to set the drilling depth for individual output units or groups of output units.

In addition, it is desirable to be able to control the drilling depth when sowing is in progress so that the drilling depth is substantially constant even when the hardness of the ground varies.

It is also desirable that as many settings as possible can be made automatically, for example controlled remotely from a driving cab or from a control centre, or autonomously by a control and adjusting system.

Output units are known from e.g. US2018/249621A1, US5595130A, EP2301315A1, US1747525A and US2013/319700A1.

One solution for setting the drilling depth of a row unit is known from DE102007028193A1. However, the row unit disclosed therein takes up a great deal of space, not least in the transverse direction of the agricultural implement. Besides, the solution is very complex and therefore expensive to manufacture and difficult to maintain.

Consequently, there is a need for an improved output unit whose drilling depth can be reset during operation of the agricultural implement, and whose setting can be optimized to provide a good balance between output precision, wear and required power during travel.

### Summary

One object of this document is thus to provide an improved output unit, and in particular an output unit whose drilling depth can be set during operation of the agricultural implement, and which can be manufactured at a lower cost.

A further object is to provide an output unit whose drilling depth can be continuously controlled in relation to the hardness of the ground.

The invention is defined by the attached independent patent claims. Embodiments are set forth in the attached dependent patent claims, in the description that follows and in the accompanying drawings.

According to a first aspect, an output unit for an agricultural implement, for feeding granular material to the ground on which the agricultural implement is travelling, is provided, comprising a seed furrow-opener, a depth regulator, for controlling a working depth for the seed furrow-opener, and a material outlet defining a delivery point at which the granular material leaves the material outlet. The output unit is characterized in that the material outlet is moveable relative to the seed furrow-opener, so that the delivery point is moveable at least vertically relative to the seed furrow-opener, and a setting device, for controlling or limiting a height position for the delivery point relative to the seed furrow-opener.

The output unit can be a sowing unit, a row unit or similar.

The seed furrow-opener can comprise one or more disc tools, such as a single or a double disc share, or a fixed seed furrow-opener, such as a towing share, cutter share, blade share or cultivator share or similar, or a combination thereof.

The depth regulator can comprise a gauge wheel, or another corresponding part for such contact against the ground so that a portion of the ground contact force of the output unit is taken up and the penetration of the seed furrow-opener into the ground is limited.

A delivery point is the point of the material outlet where the effect on the material by the material outlet ceases, so that the material falls freely, possibly under the action of an air stream from the material outlet.

Here, "setting device" means a device which allows regulating the height position of the delivery point at a distance from the material outlet.

By being able to control the height position of the delivery point, it is possible to optimize the feeding of the material to the ground to reduce the risk that the material bounces or in any other way is moved away from its intended placement.

By adjusting the position of the delivery point relative to the seed furrow-opener it is possible to ensure that the material lands correctly at a small working depth, and thus a narrow seed furrow, by then positioning the delivery point closer to the bottom of the seed furrow, but also avoiding too great an effect on the material outlet at a great working depth, which is associated with a wider seed furrow.

By controlling the height position of the material outlet it is also possible to reduce wear on the material outlet, by raising it, so that it engages with the ground when it is not necessary. This can also contribute to reducing energy consumption, since the need of traction force is reduced when the material outlet does not engage with the ground.

The depth regulator is moveable relative to the seed furrow-opener, so that the working depth is adjustable.

The setting device is configured to also simultaneously set a height position for the depth regulator relative to the seed furrow-opener and to control or limit said height position for the delivery point.

The setting of the height position of the depth regulator relative to the seed furrow-opener, and thus the working depth of the seed furrow-opener, can also be performed in a synchronized manner, such as in the same movement with, said controlling or limiting of the height position of the delivery point.

The setting device can comprise a setting part which is pivotable about a setting axle.

The output unit can further comprise a setting link, which is connected to a portion of the setting part located at a distance from the setting axle, so that a torque about the setting axle is applicable using a force along the setting link.

The material outlet can be moveably attached relative to a unit frame and wherein the material outlet is freely moveable relative to the unit frame within a limited movement range.

"Freely moveable" means that the material outlet is moveable without the effect of any actuator.

The setting part can be configured to limit said movement range at least in one direction.

The material outlet can be biased to the setting part.

The setting part can have a cam surface, wherein the movement of the material outlet in at least one direction relative to the unit frame is limited by contact against the cam surface, and wherein a distance between the setting axle and a portion of the cam surface, contacting the material outlet, is variable by pivoting the setting part.

The material outlet can be pivotably attached relative to a unit frame.

The seed furrow-opener can comprise a seed disc, rotatably supported on the unit frame.

The depth regulator can comprise a gauge wheel which can be rotatably supported on a gauge arm, which is pivotable using the setting axle.

The output unit can further comprise a pressure device, which is arranged directly behind the material outlet, viewed in the direction of travel, to receive and/or press the material to the ground.

The pressure device can comprise a press wheel, which can be rotatably supported on the press wheel arm. The press wheel arm can be pivotably attached relative to the unit frame.

The pressure device can be connected to the setting device, preferably via a resilient link, so that a position for the pressure device is adjustable.

Accordingly, the position of the pressure device relative to the unit frame is also adjustable as a function of the position of the material outlet.

The output unit can further comprise a sealer, which is arranged behind the material outlet, viewed in the direction of travel, to cover material fed via the material outlet.

The sealer can comprise a sealing wheel, which can be rotatably supported on a sealing arm. The sealing arm can be pivotably attached relative to the unit frame.

The sealer can be connected to the setting device, preferably via a resilient link, so that a position for the sealer is adjustable.

Accordingly, the position of the sealer relative to the unit frame can also be adjustable as a function of the position of the material outlet.

The pressure device and the sealer can be fixedly arranged relative to each other.

The material outlet can comprise a pipe with a wear-resistant cutting blade extending along at least an underside of the pipe, preferably along a front and/or an underside thereof.

One function of the wear-resistant cutting blade can be to ensure that the seed furrow, formed by the seed furrow-opener, is kept open so that the material can be placed therein. The cutting blade can also engage with the ground which has been opened, but already collapsed again, or with ground which has not yet been reached by the seed furrow-opener, to ensure that the seed furrow is sufficiently open for the material.

The material outlet can have a cam surface extending along an opposite side to the cutting blade of the pipe.

The pipe can have an orifice defining the delivery point and a control part extending past the orifice.

The control part can extend past the orifice from an upper side of the orifice.

The material outlet can have a ventilation opening.

The ventilation opening can be arranged upstream of the delivery point and can be configured as one or more longitudinal slots, which can each have a width below a minimum dimension of the granular material.

The material outlet can have a mounting arrangement, through which the material outlet can be mounted so that the material outlet is pivotable over a limited angular interval.

The setting device can be configured to set the material outlet so that the delivery point is positioned closer to a seed furrow bottom at a smaller working depth than at a greater working depth.

According to a second aspect an agricultural implement is provided comprising an implement frame and a plurality of output units, which is moveably arranged along at least one transverse frame portion of the implement frame.

The agricultural implement can further comprise a depth control arrangement arranged on the implement frame, wherein the setting device of the respective output unit is operatively connected to the depth control arrangement, so that the height position of the delivery point is adjustable in a synchronized manner for a plurality of said output units.

The depth control arrangement can comprise a control shaft pivotably arranged, which is connected to the respective setting device, so that pivoting of the control shaft is transferred to the respective setting device.

In the agricultural implement, the respective setting part can be connected to the control shaft, so that pivoting the control shaft causes pivoting of the setting part.

The implement frame can comprise a front transverse frame portion supporting a front output unit, and a rear transverse frame portion supporting a rear output unit, and a mechanical connection between the setting device of the front output unit and the setting device of the rear output unit, so that the front output unit and said rear output unit are controllable by means of the same actuator.

The agricultural implement can comprise a front control shaft extending along the front transverse frame portion and a rear control shaft extending along the rear transverse frame portion, wherein the mechanical connection comprises a control link arm fixedly arranged on the front control shaft, a control link arm fixedly arranged on the rear control shaft and a control link extending between distal portions of the control link arms.

The agricultural implement can comprise a pair of output units being arranged side by side along one of the transverse frame portions, a transverse link connecting the output units and a ground pressure actuator acting between the transverse frame portion and the transverse link, so that the ground pressure of said pair of output units is controllable using the ground pressure actuator.

The transverse link can be attached to the respective output unit using a joint allowing tilting between the output unit and the transverse link as well as relative movement in a direction along the transverse link.

According to a third aspect, a method of operating an agricultural implement is provided, comprising providing an output unit for feeding granular material to the ground on which the agricultural implement is travelling, which comprises a seed furrow-opener, a depth regulator, for controlling a working depth for the seed furrow-opener, and a material outlet defining a delivery point at which the granular material leaves the material outlet. The method comprises controlling or limiting a position and/or orientation of the material outlet relative to the seed furrow-opener, and thus a height position for the delivery point relative to the seed furrow-opener.

Controlling or limiting a position and/or orientation of the material outlet relative to the seed furrow-opener can comprise setting the material outlet so that the delivery point is positioned closer to a seed furrow bottom at a smaller working depth than at a greater working depth.

Controlling or limiting a position and/or orientation of the material outlet relative to the seed furrow-opener can comprise limiting a movement range of the material outlet in at least one direction.

Said height position for the delivery point can be provided at least partly under the action of the ground on the material outlet.

The material outlet can thus be freely moveably attached relative to the unit frame within a limited movement range, wherein an upper limit of the movement range can be set using the setting device and wherein the material outlet, during travel, is pressed by the ground to the upper limit.

Said controlling of a limitation of a position and/or orientation is carried out using a mechanism which is common for the output unit for said adjusting of position and/or orientation and for setting said working depth.

Said controlling of a limitation of a position and/or orientation can be carried out using a central setting mechanism which is common for the agricultural implement for setting the working depth.

### Brief description of the drawings

Fig. 1 shows a schematic perspective view of an agricultural implement in the form of a seed drill with a number of furrow openers.
Figs 2a-2c show a furrow opener viewed obliquely rearward, from above and as an exploded view, respectively.
Figs 3a-3c show a pair of interconnected furrow openers, viewed obliquely rearward, from above and from the side, respectively.
Figs 4a-4b show a set of furrow openers viewed in perspective obliquely rearward and one of said furrow openers viewed from the side, respectively, in a first working mode.
Figs 5a-5b show a set of furrow openers viewed in perspective obliquely rearward and one of said furrow openers viewed from the side, respectively, in a second working mode.
Figs 6a-6b show a seed outlet viewed in perspective and as an exploded view.
Figs 7a-7b show a seed control part, viewed from the side and from above, respectively.
Figs 8a-8b show a set of furrow openers viewed in perspective obliquely rearward and viewed from above, respectively.

### Detailed description

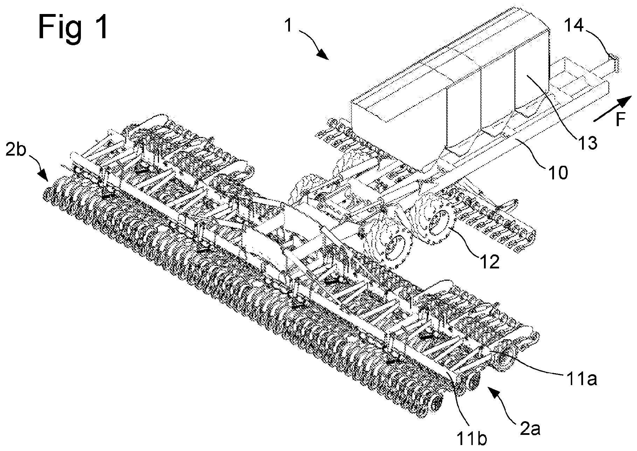

Fig. 1 shows an agricultural implement 1 in the form of a seed drill, which comprises a frame, which has at least a longitudinal frame portion 10 and at least one transverse frame portion 11a, 11b. In the example shown, the seed drill has a front transverse frame portion 11a, which supports a set 2a of front furrow openers and a rear transverse frame portion 11b, which supports a set 2b of rear furrow openers.

The agricultural implement has at least a wheel 12, a seed container 13 and a draw coupling 14, by means of which the agricultural implement can be coupled to a tractor vehicle, such as a tractor, to be drawn in a direction of travel F.

In the example shown, the agricultural implement is formed by a seed drill, and especially a seed drill for volumetric feeding of seed. Such seed drills are traditionally used for sowing cereals, such as wheat, oat, rye or corn.

The concepts shown herein can also be applied to precision seed drills and to other types of machines for feeding material, especially granular material, to the ground on which the agricultural implement is travelling.

The agricultural implement 1 frame can comprise one or more side portions, which can be foldable between a working mode and a transport mode. For example, the agricultural implement can have two, three, four or five portions which in the working mode are located next to one another, and each can carry a plurality of ground-engaging tools, such as output units (furrow openers, row units, fertilizer openers), but also levelling tools, flattening tools, cultivator tines, etc.

Such side portions can be foldable about one or more axes which are substantially parallel to the direction of travel and preferably horizontal.

Thus, the transverse frame portions 11a, 11b can be divided into a plurality of sections, where each section supports a plurality of output units.

Furthermore, the agricultural implement frame can comprise one or more front portions and/or rear portions pivotable or foldable in relation to a centre portion. For example, a front portion can comprise levelling tools and a rear portion can comprise compacting tools, such as any form of packer.

For agricultural implements with two or more side portions, each side portion can have a front portion and/or a rear portion which can be foldable with the respective side portions.

The agricultural implement shown in Fig. 1 has a large number of furrow openers 21a, 21b, which are arranged along two separated rows in the direction of travel F. The furrow openers 21a in a front set 2a can be displaced laterally in relation to the furrow openers 21b in a rear set 2b, so that a greater row density can be provided than would be allowed by the width of the output units if all output units were located on the same row. The displacement can be in the region of 40-60% of a distance between two adjacent output units in any of the rows.

All furrow openers 21a in the front set 2a can each substantially be identically designed.

In the same way, all furrow openers 21b in the rear set 2b can each substantially be identically designed.

Furthermore, the furrow openers 21b in the rear set 2b can substantially be designed in mirror image in relation to the furrow openers 21a in the front set 2a.

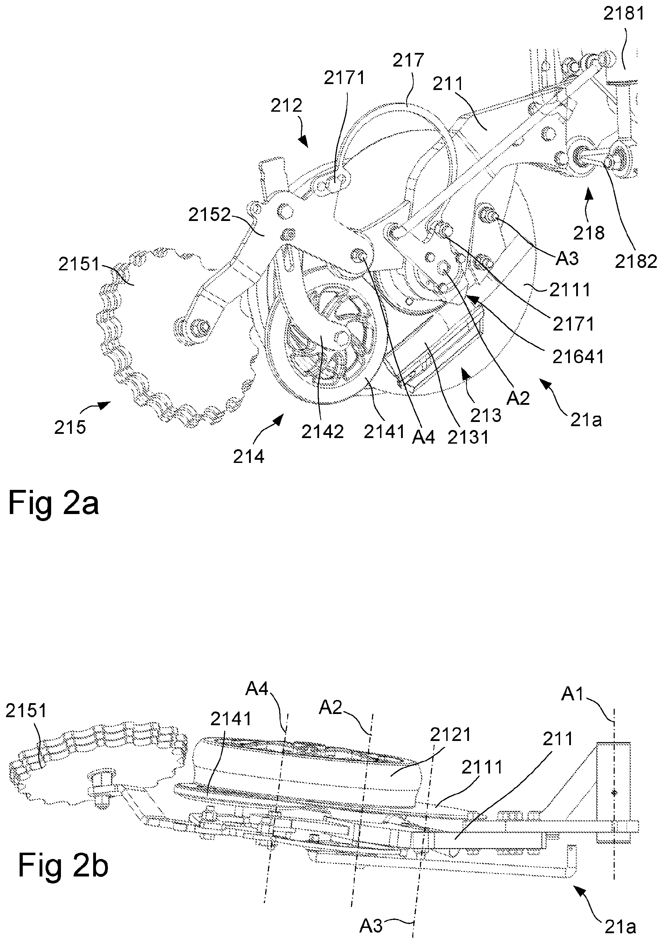

In Figs 2a-2b, an example is shown on an output unit in the form of a furrow opener 21a, which is pivotably attachable to a frame portion 11a of the agricultural implement 1. The furrow opener 21a has a unit frame 211, which can have a mainly two-dimensional, and possibly elongate, extension. At a front portion of the unit frame 211, a frame mount 2114 for pivotable attachment is present relative to the frame portion 11a, 11b, so that the furrow opener 21 is pivotable relative to the frame portion 11a, 11b about a first pivot axis A1. The first pivot axis can be substantially horizontal and parallel to the frame portion 11a, 11b. At the frame mount 2114, the output unit 21a, 21b can be freely pivotably supported relative to the frame portion 11a, 11b.

At a distance from the frame mount 2114, attachments for seed discs 2111, depth regulators 212, press wheel devices 214 and sealer devices 215 can exist, where such devices are present.

An attachment for seed discs 2111 can be arranged at a rear and lower portion of the unit frame 211. Attachments for press wheel devices 214 and/or sealer devices 215 can be arranged at a rear and upper portion of the unit frame 211.

The seed disc 2111 can be rotatably attached to the unit frame 211, so that this is rotatable about a second pivot axis A2, which can form an acute angle with the first pivot axis A1. The angle between the first and second pivot axes A1, A2 can be approximately 1-30 degrees, preferably approximately 1-20 degrees or approximately 1-10 degrees, viewed in a horizontal plane.

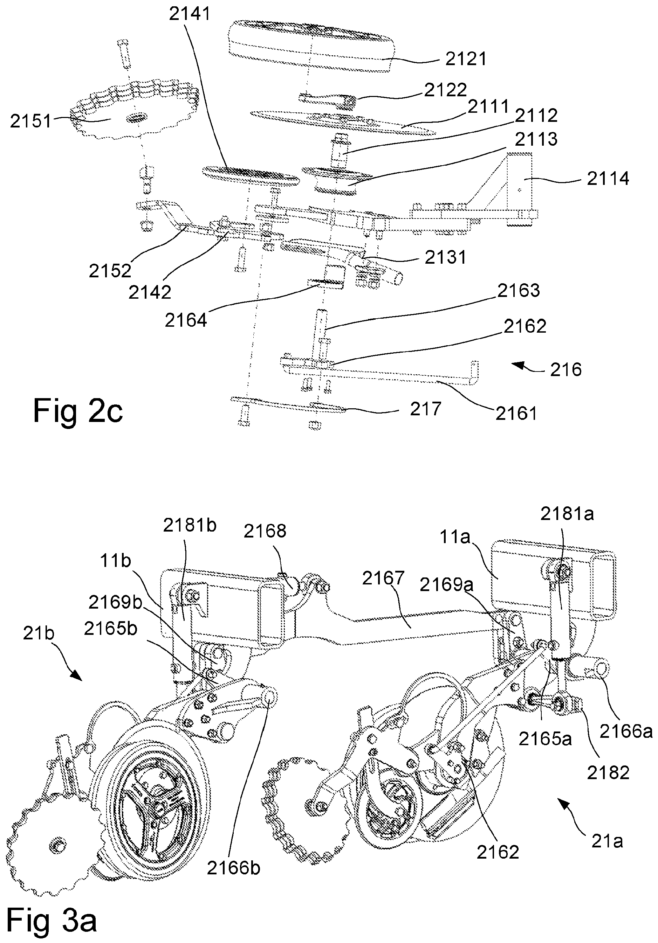

With reference to Fig. 2c, the seed disc 2111 can be freely rotatably attached relative to the unit frame 211 via a bearing hub 2113. The bearing hub 2113 can be received in a recess or in a through-hole in the unit frame 211.

The depth regulator 212 can comprise a gauge wheel 2121, which can be freely rotatably supported at a free end of a gauge arm 2122. The gauge arm can be pivotable about the second pivot axis A2 and fixedly connected to a setting axle 2163, so that the pivotal position of the gauge arm 2122 is adjustable using a setting device 216.

The setting device 216 can comprise the setting axle 2163, which is pivotably arranged relative to the unit frame 211, so that the setting device 216 is pivotable about the second pivot axis A2.

The setting part 2162 can be fixedly connected to the setting axle 2163, so that the setting part 2162 and the gauge arm 2122 are fixedly arranged relative to each other and pivotable about the second pivot axis A2. The setting part 2162 can comprise an arm, at which a setting link 2161 is pivotably connected for controlling the setting device 216.

The setting axle 2163 can extend through the bearing hub 2113, so that the setting part 2162 is situated on one of the axial sides of the bearing hub 2113 and so that the gauge arm 2122 is situated on the second, opposite, axial side of the bearing hub 2113.

The setting part 2162 can comprise a cam part 2164, which can be fixable to the setting part 2162, so that the cam part 2164 and the setting part 2162 are fixedly arranged with respect to each other, wherein the cam part 2164 is pivotable together with the setting part 2162 about the second pivot axis A2.

A material outlet 213 is moveably attached relative to the unit frame 211, preferably pivotable about an axis A3 which can be parallel to the second pivot axis A2. The material outlet 213 can be connected via a pipe or a hose to a material container 13, possibly via a distributor device, designed to distribute material from the container 13 using an air flow to a plurality of output units 21a, 21b. The material outlet 213 can comprise a pipe 2131, such as a sowing pipe.

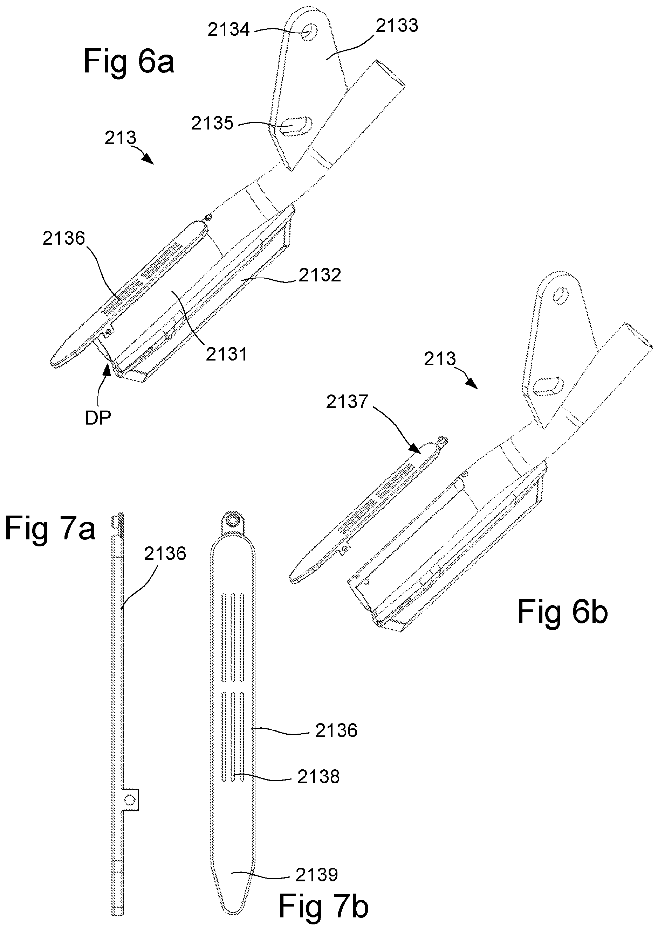

The material outlet 213 will be described further with reference to Figs 7a-7b.

The cam part 2164 can have a cam surface 21641 in slidable engagement with a surface 2137 facing the cam part of the material outlet 213, so that the position of the material outlet is limited upward by the cam part. The cam part can have such a form that a position for an upper limitation position for the material outlet is dependent on the pivotal position of the cam part about the second pivot axis A2.

A distance between the second pivot axis A2 and a contact point between the cam part 2164 and the material outlet 213 can thus be set by pivoting the cam part 2164 about the second pivot axis A2.

The cam surface 21641, or the entire cam part 2164, can be made of a soft material, such as polymer material, to reduce wear on the material outlet 213.

The pressure device 214 can comprise a press wheel 2141, which can be freely rotatably supported on a press wheel arm 2142. The press wheel 2141 can be positioned directly behind the material outlet 213, viewed in the direction of travel, so that output material is caught by the press wheel 2141 and pressed into contact with the soil.

The press wheel arm 2142 can be moveably, and in particular pivotably, attached to the unit frame 211, so that the height position of the press wheel in relation to the unit frame 211 and/or in relation to the gauge wheel is adjustable.

Furthermore, the press wheel arm 2142 can be moveably, and in particular pivotably, attached to the unit frame 211, so that the position of the press wheel along the direction of travel F in relation to the unit frame 211 and/or in relation to the material outlet 213 is adjustable.

The sealer device 215 can comprise a sealer wheel 2151, which can be freely rotatably supported on a sealer arm 2152. The sealer wheel 2151 can be arranged to rotate about an axis which forms an acute angle to the first pivot axis A1, and which also forms an acute angle to a horizontal plane, so that the sealer wheel has a side whose surface normal points obliquely upward and forward, so that it can move soil laterally to cover a seed furrow formed by the seed disc 2111.

The sealer arm 2152 can be moveably, and in particular pivotably, attached to the unit frame 211, so that the height position of the sealer wheel in relation to the unit frame 211 and/or in relation to the gauge wheel is adjustable.

In the example shown, the press wheel arm 2142 and the sealer arm 2152 are fixedly connected to each other and pivotable relative to the unit frame about a fourth pivot axis A4, which can be parallel to the second pivot axis A2.

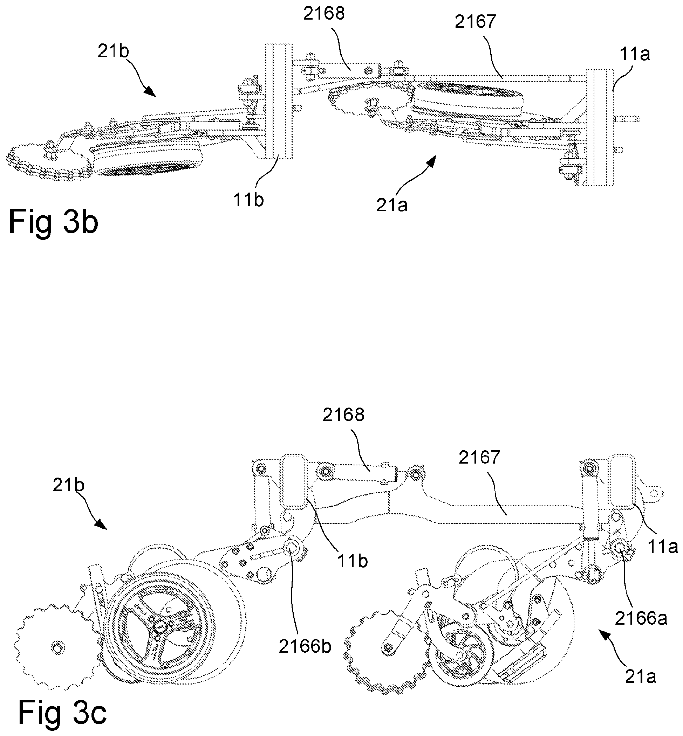

In Figs 3a-3c, a pair of furrow openers 21a, 21b is shown, having a common control arrangement for controlling a working depth.

The control arrangement can comprise a depth-regulating cylinder 2168, which is connected to a control link 2167, which via a control link arm 2169 acts on one or more control shafts 2166a, 2166b.

The depth-regulating cylinder 2168 can be a hydraulic cylinder, which can act between a frame portion, here a rear transverse frame portion 11b, and the control link 2167. In the example shown, the control link 2167 extends between a rear control link arm 2169 associated with a rear control shaft 2166b and a front control link arm 2169 associated with a front control shaft 2166a.

Each control link arm 2169a, 2169b is, at a proximal portion thereof, fixedly attached to the control shaft 2166a, 2166b, wherein a control link 2167 is pivotably attached to a distal portion of the control link arm 2169a, 2169b.

A control arm 2165 associated with the furrow opener 21a, 21b is fixedly arranged on the control shaft 2166a, 2166b and connected to the setting link 2161. Each control arm 2165, 2165a, 2165b is, at a proximal portion thereof, fixedly attached to the control shaft 2166, wherein the setting link 2161 is pivotably attached to a distal portion of the control arm 2165, 2165a, 2165b.

At least one of the press wheel arm 2142 and the sealer arm 2152 can be connected to the setting part 2162 via a link part 217, which here is formed as a spring.

The spring can have a spring mount 2171 on the setting part 2162, which is located at a distance from the second pivot axis A2, so that an arm is provided.

Furthermore, the spring can have a spring mount 2172 on the press wheel arm 2142 or on the sealer arm 2152, which is located at a distance from the fourth pivot axis A4.

In the example shown, the link part 217 is shown as a spring, which can be compressed or expanded along a line between the spring mounts. Thus, a certain relative movement between the sealer wheel/press wheel and the setting device 216 can be allowed. The type of spring can be selected on the basis of the space available in the structure.

Operating the depth-regulating cylinder 2168 brings the control link 2167 to provide substantially the same movement of the front and rear control link arms 2169. Thus, the same pivotal movement is also provided for the front and rear control shafts 2166a, 2166b.

Pivoting a control shaft 2166a, 2166b causes pivoting the respective control arm 2165 associated with the furrow opener 21a, 21b. A control shaft can thus be operated for controlling the working depth for a plurality of furrow openers arranged along the control shaft and connected thereto.

The pivotal movement of the control arm 2165 is transferred to a pivotal movement of the setting part 2162 using the setting link 2161.

The furrow openers 21a, 21b can be freely pivotably supported on the control shaft 2166a, 2166b. A ground pressure cylinder 2181a, 2181b operating between a frame portion, here the respective transverse frame portion 11a, 11b, and at least a furrow opener 21a, 21b, can be arranged for setting a pressure which the furrow opener will exert on the ground.

In the arrangement shown, each ground pressure cylinder 2181a, 2181b is arranged to control ground pressure for two adjacent furrow openers 21a, 21b, by means of the ground pressure cylinder 2181a, 2181b acting on a transverse link 2182 extending between the adjacent furrow openers.

The transverse link 2182 can be pivotably attached to the respective furrow opener, so that the adjacent furrow openers can have different pivotal positions about the control shaft 2166a, 2166b.

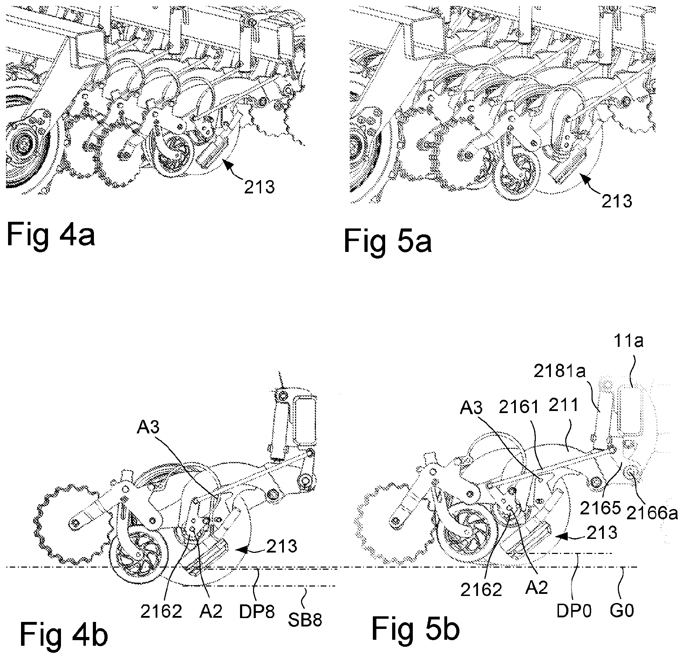

In Figs 4a-4b, a furrow opener 21a is shown in a first working position, where a great working depth is provided. As an example, a working depth of 8 cm is shown.

In Figs 5a-5b, a furrow opener 21a is shown in a second position, where a small working depth is provided. As an example, a working depth of 0 cm is shown.

In Figs 4a-4b and 5a-5b "ground level" is indicated, i.e. the level the gauge wheel 2121 is set to, with reference designation G0. The delivery point for the material outlet is indicated with reference designation DP8 in Figs 4a-4b and with reference designation DP0 in Figs 5a-5b.

As will best be seen in a comparison between Fig. 4b and Fig. 5b, the setting part 2162 is situated, in Fig. 4b, in a first pivotal position and, in Fig. 5b, in a second pivotal position.

In the first pivotal position (Fig. 4b), which is intended for a great working depth, the distance between the second pivot axis A2 and the material outlet 213 is minimal. Thus, the material outlet is allowed to occupy a position which places the delivery point DP8 as high as possible in relation to the bottom SB8 of the seed furrow.

In this position, the material outlet is therefore retracted as high as possible, in order to not engage with the ground, wherein the wear of the material outlet is minimized, as is the friction of the material outlet against the ground, and the consequent traction force requirement.

In the second pivotal position (Fig. 5b), which is intended for a small working depth, the distance between the second pivot axis A2 and the material outlet 213 is minimal. Thus, the material outlet is brought to occupy a position which places the delivery point DP0 as low as possible in relation to the bottom of the seed furrow, which in Fig. 5b coincides with the ground surface G0.

In this position, the material outlet is therefore as low as possible, in order to engage with the ground to remove such ground which the seed furrow-opener has not successfully removed, and thus ensuring that a suitable furrow is formed.

As can be seen in Figs 4b and 5b, the material outlet 213 is pivotably attached to the unit frame 211, so that pivoting is possible about the third pivot axis A3.

Figs 6a-6b show detail views of the material outlet 213. The material outlet can comprise a pipe 2131, one end of which has an orifice defining a delivery point DP. The other end of the pipe 2131 can be attachable via for example a hose to a material source, such as a distributor or a singulator (not shown). Furthermore, the material outlet 213 can comprise a wear-resistant cutting blade 2132, such as a hard metal cutter, the function of which is to protect the pipe 2131 from the abrasive effect of the ground. The cutting blade 2132 can be arranged to extend along the pipe, across at least a part of its front side and/or underside. The function of the cutting blade 2132 can also be to ensure engagement with the ground, in order to remove such ground which cannot be removed by the seed furrow-opener and/or in order to remove such ground which has had time to collapse since it was opened by the seed furrow-opener.

The material outlet 213 can have a mounting tongue 2133, which can be attached to the pipe 2131 or to the cutting blade 2132 and can be designed for mounting on the unit frame 211.

In the example shown, the mounting tongue 2133 has a first mounting hole 2134 which is circular and intended to be the pivot axis A3. The mounting tongue can also have a guide hole 2135, which can be elongate and possibly curved about the axis A3.

With such a mounting device, the material outlet 213 can be mounted so that it is freely moveable, such as pivotable, relative to the unit frame 211 within a movement range, here an angular interval, which is limited by the length of the guide hole 2135.

Along an upper side of the pipe 2131, a cam surface 2137 is provided, along which the cam part 2164 is slidably contactable. The cam surface 2137 can be provided with a wear-resistant part, such as a hard metal part, or with a replaceable part, such as a plastic part for contacting the cam part 2164.

In the example shown, the cam surface 2137 is formed on a separate seed control part 2136, which is releasably mounted along the upper side of the pipe 2131.

The upper side of the pipe 2131 can have a longitudinal opening, such as a slot, wherein the separate seed control part 2136 can be a cover for this slot.

In Figs 7a-7b, detail views of the separate seed control part 2136 are shown.

The separate seed control part can have ventilation openings 2138, such as small slots, which allow air, but not granular material, to pass therethrough.

Furthermore, the material outlet 213 can have an outwardly extending control part 2139 from an upper side of the orifice, which can be configured to control, in at least one direction, the granular material leaving the pipe 2131.

The control part 2139 can be configured as a part of the separate seed control part 2136, so that the separate part extends outward from the orifice.

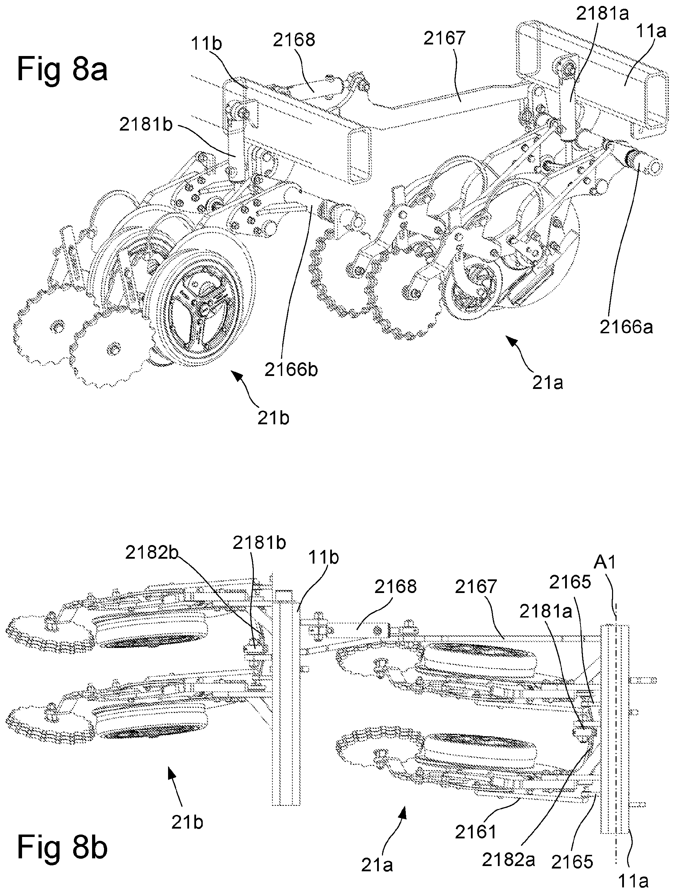

Figs 8a-8b show a part of an agricultural implement 1 comprising two portions of transverse frame portions 11a, 11b and two pairs of furrow openers, wherein a first pair of furrow openers are supported by a front transverse frame portion 11a and a second pair of furrow openers are supported by a rear transverse frame portion 11b. The front furrow openers 21a are arranged with a front common control shaft 2166a, and the rear furrow openers 21b are arranged with a rear common control shaft 2166b.

The front furrow openers 21a are connected to the front control shaft 2166a, as described above.

The rear furrow openers 21a are connected to the rear control shaft 2166b, as described above.

A control shaft 2166a, 2166b can extend across a plurality of adjacently arranged furrow openers, which thus simultaneously can be operated using one or a few depth-regulating cylinders.

A control link 2167 connects the front and rear control shafts, as described above.

A common depth-regulating cylinder 2168 is arranged to act between the rear transverse frame portion 11b and the control link 2167.

A front ground pressure cylinder 2181a is arranged to control the ground pressure for both the front furrow openers 21a.

A rear ground pressure cylinder 2181b is arranged to control the ground pressure for both the rear furrow openers 21b.

A transverse link 2182a, 2182b extends between each pair of furrow openers arranged on the same control shaft.

The front ground pressure cylinder 2181a can be arranged to act between the front transverse frame portion 11a and the front transverse link 2182a, so that the front ground pressure cylinder controls the ground pressure for a pair of adjacent furrow openers.

By forming a plurality of pairs of adjacent furrow openers, which have a common ground pressure cylinder, it is possible to reduce the number of ground pressure cylinders and at the same time provide good flexibility for the furrow openers.

With an agricultural implement comprising furrow openers as described above, it is possible to set a height position for a delivery point DP of a material outlet 213, so that the vertical position of the delivery point can be adapted to the working depth of the furrow opener.

According to some embodiments, the height adjustment can be provided by means of the material outlet 213 being freely moveably, such as pivotably, attached relative to the unit frame 211, wherein an end position for the movement is adjustable and wherein the material outlet is moreover freely moveable over a movement range but limited in one direction to a maximum height. The material outlet 213 can be pressed to the limitation by means of the action of the ground when the agricultural implement is driven.

In other embodiments, the material outlet can be pre-tensioned against the limitation, for example using some form of resilient part.

Adjusting the limitation of the height position of the material outlet 213 can take place as one of a setting operation for setting the working depth for the output unit 21f, 21b. The setting can thus be provided by means of a centrally controlled depth-regulating cylinder 2168 being set to the desired position, wherein a control link 2167 is affected and in turn affects the control shafts 2166a, 2166b, so that these are pivoted, wherein the setting link 2161 makes the setting part 2162 pivot, so that the cam part as well as the gauge arm 2122 pivot, wherein the working depth is set simultaneously as the top position of the material outlet 213 is set.

By connecting the setting part 2162 with at least one of a press wheel arm 2142 and a sealer arm 2152, the position of the press wheel 2141 and/or the sealer wheel 2151 can also be set to an optimal position for the working depth.

## Claims

1. Output unit for an agricultural implement, for feeding granular material to the ground on which the agricultural implement (1) is travelling, comprising:
a seed furrow-opener (2111),
a depth regulator (2121), for controlling a working depth for the seed furrow-opener (2111), and
a material outlet (213) defining a delivery point at which the granular material leaves the material outlet,
wherein the material outlet (213) is moveable relative to the seed furrow-opener (2111), so that the delivery point is moveable at least vertically relative to the seed furrow-opener (2111), and
the output unit further comprises a setting device (216), for controlling or limiting a height position for the delivery point relative to the seed furrow-opener (2111),
wherein the depth regulator (2121) is moveable relative to the seed furrow-opener (2111), so that the working depth is adjustable,
**characterised in that**
the setting device (216) is configured to simultaneously set a height position for the depth regulator (2121) relative to the seed furrow-opener (2111) and to control or limit said height position for the delivery point.

2. Output unit according to Claim 1, wherein the setting device (216) comprises a setting part (2162) which is pivotal about a first pivot axis (A2).

3. Output unit according to Claim 2, further comprising a setting link (2161), which is connected to a portion of the setting part (2162) located at a distance from the first pivot axis (A1), so that a torque about the first pivot axis (A1) is applicable using a force along the setting link (2161).

4. Output unit according to either Claim 2 or 3, wherein the material outlet (213) is moveably attached relative to a unit frame (211) and wherein the material outlet (213) is freely moveable relative to the unit frame (211) within a limited movement range.

5. Output unit according to Claim 4, wherein the material outlet (213) is pre-tensioned against the setting part (2162).

6. Output unit according to any one of Claims 2-5, wherein the setting part (2162) has a cam surface (21641), wherein the movement of the material outlet (213) in at least one direction relative to the unit frame (211) is limited by contact against the cam surface (21641), and wherein a distance between the first pivot axis (A2) and a portion of the cam surface (21641), contacting the material outlet (213), is variable by pivoting the setting part (2162).

7. Output unit according to any one of Claims 2-6, wherein the depth regulator (2121) comprises a gauge wheel which is rotatably supported on a gauge arm (2122), which is pivotable using the setting axis (2163).

8. Output unit according to any one of the preceding claims, further comprising a pressure device (214), which is arranged directly behind the material outlet (213), viewed in the direction of travel, to receive and/or press the material to the ground.

9. Output unit according to any one of the preceding claims, wherein the material outlet (213) comprises a pipe (2131) with a wear-resistant cutting blade (2132) extending along the pipe, preferably along a front and/or an underside thereof.

10. Output unit according to Claim 9, wherein the material outlet (213) has a cam surface (2137) extending along an opposite side to the cutting blade (2132) of the pipe (2131).

11. Output unit according to any one of the preceding claims, wherein the setting device (216) is configured to set the material outlet (213) so that the delivery point is positioned closer to a seed furrow bottom at a smaller working depth than at a greater working depth.

12. Agricultural implement, comprising an implement frame (11a, 11b) and a plurality of output units (21a, 21b) according to any one of the preceding claims, which is moveably arranged along at least one transverse frame portion (11a, 11b) of the implement frame.

13. Agricultural implement according to Claim 12, further comprising a depth control arrangement arranged on the implement frame (11a, 11b), wherein the setting device (216) of the respective output unit (21a, 21b) is operatively connected to the depth control arrangement, so that the height position of the delivery point is adjustable in a synchronized manner for a number of said output units (21a, 21b).

14. Method of operating an agricultural implement, comprising:
providing an output unit (21a, 21b) for feeding granular material to the ground on which the agricultural implement (1) is travelling, which comprises a seed furrow-opener (2111), a depth regulator (212), for controlling a working depth for the seed furrow-opener (2111), and a material outlet (213) defining a delivery point at which the granular material leaves the material outlet, and
controlling or limiting a position and/or orientation of the material outlet (213) relative to the seed furrow-opener (2111), and thus a height position for the delivery point relative to the seed furrow-opener (2111),
**characterised in that**
said controlling of a limitation of a position and/or orientation is carried out using a mechanism which is common for the output unit (21a, 21b) for said adjusting of position and/or orientation and for setting said working depth.

15. Method according to Claim 14, wherein controlling or limiting a position and/or orientation of the material outlet (213) relative to the seed furrow-opener (2111) comprises setting the material outlet (213) so that the delivery point is positioned closer to a seed furrow bottom at a smaller working depth than at a greater working depth.

## Patentansprüche

1. Ausgabeeinheit für ein landwirtschaftliches Arbeitsgerät zum Zuführen von körnigem Material zu dem Boden, auf dem sich das landwirtschaftliche Arbeitsgerät (1) bewegt, umfassend:
einen Saatfurchenöffner (2111),
einen Tiefenregler (2121) zum Steuern einer Arbeitstiefe für den Saatfurchenöffner (2111), und
einen Materialauslass (213), der einen Abgabepunkt definiert, an dem das körnige Material den Materialauslass verlässt,
wobei der Materialauslass (213) relativ zu dem Saatfurchenöffner (2111) beweglich ist, so dass der Abgabepunkt zumindest vertikal relativ zu dem Saatfurchenöffner (2111) beweglich ist,
wobei die Ausgabeeinheit ferner eine Einstellvorrichtung (216) zum Steuern oder Begrenzen einer Höhenposition für den Abgabepunkt relativ zu dem Saatfurchenöffner (2111) umfasst,
wobei der Tiefenregler (2121) relativ zu dem Saatfurchenöffner (2111) beweglich ist, so dass die Arbeitstiefe verstellbar ist,
**dadurch gekennzeichnet, dass**
die Einstellvorrichtung (216) dazu ausgelegt ist, gleichzeitig eine Höhenposition für den Tiefenregler (2121) relativ zu dem Saatfurchenöffner (2111) einzustellen und die Höhenposition für den Abgabepunkt zu steuern oder zu begrenzen.

2. Ausgabeeinheit nach Anspruch 1, wobei die Einstellvorrichtung (216) ein Einstellteil (2162) umfasst, das um eine erste Schwenkachse (A2) schwenkbar ist.

3. Ausgabeeinheit nach Anspruch 2, ferner umfassend ein Einstellglied (2161), das mit einem Abschnitt des Einstellteils (2162) verbunden ist, der sich in einem Abstand von der ersten Schwenkachse (A1) befindet, so dass ein Drehmoment um die erste Schwenkachse (A1) unter Verwendung einer Kraft entlang des Einstellglieds (2161) aufbringbar ist.

4. Ausgabeeinheit nach Anspruch 2 oder 3, wobei der Materialauslass (213) relativ zu einem Einheitsrahmen (211) beweglich angebracht ist und wobei der Materialauslass (213) relativ zu dem Einheitsrahmen (211) innerhalb eines begrenzten Bewegungsbereichs frei beweglich ist.

5. Ausgabeeinheit nach Anspruch 4, wobei der Materialauslass (213) gegen das Einstellteil (2162) vorgespannt ist.

6. Ausgabeeinheit nach einem der Ansprüche 2-5, wobei das Einstellteil (2162) eine Nockenfläche (21641) aufweist, wobei die Bewegung des Materialauslasses (213) in mindestens einer Richtung relativ zu dem Einheitsrahmen (211) durch einen Kontakt gegen die Nockenfläche (21641) begrenzt ist, und wobei ein Abstand zwischen der ersten Schwenkachse (A2) und einem Abschnitt der Nockenfläche (21641), der mit dem Materialauslass (213) in Kontakt steht, durch Schwenken des Einstellteils (2162) veränderbar ist.

7. Ausgabeeinheit nach einem der Ansprüche 2-6, wobei der Tiefenregler (2121) ein Messrad umfasst, das drehbar auf einem Messarm (2122) gelagert ist, der unter Verwendung der Einstellachse (2163) schwenkbar ist.

8. Ausgabeeinheit nach einem der vorhergehenden Ansprüche, ferner umfassend eine Druckvorrichtung (214), die in Fahrtrichtung gesehen direkt hinter dem Materialauslass (213) angeordnet ist, um das Material aufzunehmen und/oder auf den Boden zu pressen.

9. Ausgabeeinheit nach einem der vorhergehenden Ansprüche, wobei der Materialauslass (213) ein Rohr (2131) mit einer verschleißfesten Schneidklinge (2132) umfasst, das sich entlang des Rohrs, vorzugsweise entlang einer Vorderseite und/oder einer Unterseite davon, erstreckt.

10. Ausgabeeinheit nach Anspruch 9, wobei der Materialauslass (213) eine Nockenfläche (2137) aufweist, die sich entlang einer der Schneidklinge (2132) des Rohrs (2131) gegenüberliegenden Seite erstreckt.

11. Ausgabeeinheit nach einem der vorhergehenden Ansprüche, wobei die Einstellvorrichtung (216) dazu ausgelegt ist, den Materialauslass (213) so einzustellen, dass der Abgabepunkt bei einer kleineren Arbeitstiefe näher an einem Saatfurchenboden als bei einer größeren Arbeitstiefe positioniert ist.

12. Landwirtschaftliches Arbeitsgerät, umfassend einen Arbeitsgeräterahmen (11a, 11b) und mehrere Ausgabeeinheiten (21a, 21b) nach einem der vorhergehenden Ansprüche, das entlang mindestens eines Querrahmenabschnitts (11a, 11b) des Arbeitsgeräterahmens beweglich angeordnet ist.

13. Landwirtschaftliches Arbeitsgerät nach Anspruch 12, ferner umfassend eine am Arbeitsgeräterahmen (11a, 11b) angeordnete Tiefensteuerungsanordnung, wobei die Einstellvorrichtung (216) der jeweiligen Ausgabeeinheit (21a, 21b) mit der Tiefensteuerungsanordnung wirkverbunden ist, so dass die Höhenposition des Abgabepunktes für eine Anzahl der Ausgabeeinheiten (21a, 21b) auf synchronisierte Weise verstellbar ist.

14. Verfahren zum Betreiben eines landwirtschaftlichen Arbeitsgeräts, das Folgendes umfasst:
Bereitstellen einer Ausgabeeinheit (21a, 21b) zum Zuführen von körnigem Material zu dem Boden, auf dem sich das landwirtschaftliche Arbeitsgerät (1) bewegt, die einen Saatfurchenöffner (2111), einen Tiefenregler (212) zum Steuern einer Arbeitstiefe für den Saatfurchenöffner (2111) und einen Materialauslass (213) umfasst, der einen Abgabepunkt definiert, an dem das körnige Material den Materialauslass verlässt, und
Steuern oder Begrenzen einer Position und/oder Ausrichtung des Materialauslasses (213) relativ zu dem Saatfurchenöffner (2111) und somit einer Höhenposition für den Abgabepunkt relativ zu dem Saatfurchenöffner (2111),
**dadurch gekennzeichnet, dass**
die Steuerung einer Begrenzung einer Position und/oder Ausrichtung unter Verwendung eines Mechanismus ausgeführt wird, der für die Ausgabeeinheit (21a, 21b) zum Verstellen der Position und/oder Ausrichtung und zum Einstellen der Arbeitstiefe gemeinsam ist.

15. Verfahren nach Anspruch 14, wobei das Steuern oder Begrenzen einer Position und/oder Ausrichtung des Materialauslasses (213) relativ zu dem Saatfurchenöffner (2111) Einstellen des Materialauslasses (213) so umfasst, dass der Abgabepunkt bei einer kleineren Arbeitstiefe näher an einem Saatfurchenboden als bei einer größeren Arbeitstiefe positioniert ist.

## Revendications

1. Unité de sortie pour un équipement agricole, destinée à alimenter en matériau granulaire le sol sur lequel l'équipement agricole (1) se déplace, comprenant :
un dispositif d'ouverture de sillon pour graines (2111), un régulateur de profondeur (2121), destiné à commander une profondeur de travail pour le dispositif d'ouverture de sillon pour graines (2111), et
une sortie de matériau (213) définissant un point de distribution auquel le matériau granulaire quitte la sortie de matériau,
la sortie de matériau (213) étant mobile par rapport au dispositif d'ouverture de sillon pour graines (2111), de sorte que le point de distribution soit mobile au moins verticalement par rapport au dispositif d'ouverture de sillon pour graines (2111),
l'unité de sortie comprenant en outre un dispositif de réglage (216), pour commander ou limiter une position en hauteur du point de distribution par rapport au dispositif d'ouverture de sillon pour graines (2111),
le régulateur de profondeur (2121) étant mobile par rapport au dispositif d'ouverture de sillon pour graines (2111), de sorte que la profondeur de travail soit réglable,
**caractérisé en ce que**
le dispositif de réglage (216) est conçu pour régler simultanément une position en hauteur du régulateur de profondeur (2121) par rapport au dispositif d'ouverture de sillon pour graines (2111) et pour commander ou limiter ladite position en hauteur pour le point de distribution.

2. Unité de sortie selon la revendication 1, le dispositif de réglage (216) comprenant une partie de réglage (2162) qui peut pivoter autour d'un premier axe de pivotement (A2).

3. Unité de sortie selon la revendication 2, comprenant en outre une bielle de réglage (2161), qui est reliée à une partie de la partie de réglage (2162) située à une certaine distance du premier axe de pivotement (A1), de sorte qu'un couple autour du premier axe de pivotement (A1) soit applicable au moyen d'une force le long de la bielle de réglage (2161).

4. Unité de sortie selon la revendication 2 ou 3, la sortie de matériau (213) étant fixée de manière mobile par rapport à un châssis d'unité (211) et la sortie de matériau (213) étant librement mobile par rapport au châssis d'unité (211) dans une plage de mouvement limitée.

5. Unité de sortie selon la revendication 4, la sortie de matériau (213) étant précontrainte contre la partie de réglage (2162).

6. Unité de sortie selon l'une quelconque des revendications 2 à 5, la partie de réglage (2162) ayant une surface de came (21641), le mouvement de la sortie de matériau (213) dans au moins une direction par rapport au châssis d'unité (211) étant limité par contact contre la surface de came (21641), et une distance entre le premier axe de pivotement (A2) et une partie de la surface de came (21641), en contact avec la sortie de matériau (213), étant variable par pivotement de la partie de réglage (2162).

7. Unité de sortie selon l'une quelconque des revendications 2 à 6, le régulateur de profondeur (2121) comprenant une roue de jauge qui est supportée de manière rotative sur un bras de jauge (2122), qui peut pivoter au moyen de l'axe de réglage (2163).

8. Unité de sortie selon l'une quelconque des revendications précédentes, comprenant en outre un dispositif de pression (214) qui est disposé directement derrière la sortie de matériau (213), vu dans le sens de déplacement, pour recevoir et/ou presser le matériau sur le sol.

9. Unité de sortie selon l'une quelconque des revendications précédentes, la sortie de matériau (213) comprenant un tube (2131) avec une lame de coupe (2132) résistant à l'usure s'étendant le long du tube, de préférence le long d'une face avant et/ou d'une face inférieure de celui-ci.

10. Unité de sortie selon la revendication 9, la sortie de matériau (213) ayant une surface de came (2137) s'étendant le long d'un côté opposé à la lame de coupe (2132) du tube (2131).

11. Unité de sortie selon l'une quelconque des revendications précédentes, le dispositif de réglage (216) étant conçu pour régler la sortie de matériau (213) de sorte que le point de distribution soit positionné plus près d'un fond de sillon pour graines à une profondeur de travail plus petite qu'à une profondeur de travail plus grande.

12. Équipement agricole, comprenant un châssis d'équipement (11a, 11b) et une pluralité d'unités de sortie (21a, 21b) selon l'une quelconque des revendications précédentes, qui est agencée de manière mobile le long d'au moins une partie de châssis transversale (11a, 11b) du châssis d'équipement.

13. Équipement agricole selon la revendication 12, comprenant en outre un dispositif de commande de profondeur disposé sur le châssis d'équipement (11a, 11b), le dispositif de réglage (216) de l'unité de sortie (21a, 21b) respective étant relié fonctionnellement à l'agencement de commande de profondeur, de sorte que la position en hauteur du point de distribution soit réglable de manière synchronisée pour un certain nombre desdites unités de sortie (21a, 21b).

14. Procédé de fonctionnement d'un équipement agricole, comprenant les étapes consistant à :
fournir une unité de sortie (21a, 21b) destinée à alimenter en matériau granulaire le sol sur lequel l'équipement agricole (1) se déplace, qui comprend un dispositif d'ouverture de sillon pour graines (2111), un régulateur de profondeur (212), destiné à commander une profondeur de travail pour le dispositif d'ouverture de sillon pour graines (2111), et une sortie de matériau (213) définissant un point de distribution au niveau duquel le matériau granulaire quitte la sortie de matériau, et
commander ou limiter une position et/ou orientation de la sortie de matériau (213) par rapport au dispositif d'ouverture de sillon pour graines (2111) et, par conséquent, une position en hauteur pour le point de distribution par rapport au dispositif d'ouverture de sillon pour graines (2111),
**caractérisé en ce que**
ladite commande d'une limitation de position et/ou d'orientation s'effectue au moyen d'un mécanisme qui est commun à l'unité de sortie (21a, 21b) pour ledit réglage de position et/ou d'orientation et pour régler ladite profondeur de travail.

15. Procédé selon la revendication 14, la commande ou la limitation d'une position et/ou orientation de la sortie de matériau (213) par rapport au dispositif d'ouverture de sillon pour graines (2111) comprenant l'étape consistant à régler la sortie de matériau (213) de sorte que le point de distribution soit positionné plus près d'un fond de sillon pour graines à une profondeur de travail plus petite qu'à une profondeur de travail plus grande.
